(19)

Europäisches Patentamt

European Patent Office

Office européen des brevets

(11) **EP 1 970 702 A1**

(12) **EUROPEAN PATENT APPLICATION**

(43) Date of publication:
**17.09.2008 Bulletin 2008/38**

(51) Int Cl.:
*G01N 23/12* (2006.01)  *E21B 49/08* (2006.01)
*G01F 1/74* (2006.01)

(21) Application number: **07290277.8**

(22) Date of filing: **05.03.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicants:
• **Services Pétroliers Schlumberger**
**75007 Paris (FR)**
Designated Contracting States:
**FR**
• **Schlumberger Technology B.V.**
**2514 JG  The Hague (NL)**
Designated Contracting States:
**BG CZ DE DK GR HU IE IT LT PL RO SI SK TR**
• **Schlumberger Holdings Limited**
**Road Town, Tortola (VG)**
Designated Contracting States:
**GB NL**
• **PRAD Research and Development N.V.**
**Willemstad, Curacao (AN)**
Designated Contracting States:
**AT BE CH CY EE ES FI IS LI LU LV MC PT SE**

(72) Inventors:
• **Pinguet, Bruno**
**Bergen 5072 (NO)**
• **Roux, Gilles**
**97100 Sainte Genevieve des Bois (FR)**

(74) Representative: **Raybaud, Hélène F. A.**
**Etudes & Productions Schlumberger**
**1, rue Henri Becquerel**
**B.P. 202**
**92142 Clamart Cedex (FR)**

(54) **Detection of an element in a flow**

(57)    A method of detecting an additional element from a plurality of other elements forming a multiphase flow. The method comprising: measuring an energy spectrum response based on electromagnetic irradiation of the multiphase flow. Determining a fraction concentration of the other elements forming the multiphase flow based on a lower energy peak in the spectrum response and detecting an additional element in the multiphase flow based on measuring a variation of a higher energy peak in the spectrum response. It is also possible to measure the quantity of the additional element and to compensate the fractional concentrations of the respective n-phase measurements.

Fig 5

**EP 1 970 702 A1**

**Description**

**Field**

The invention relates to detecting an element in a flow, and in particular, but not exclusively to a method and apparatus for detecting an additional element to that comprising the flow.

**Background**

There are many potential applications in which it is useful to be able to sense the constituent elements flowing through a pipe. In the oil sector, it is especially useful to be able to determine in a substantially real-time manner the relative quantities of elements such as water, oil and gas. These elements not only are composed of different molecules, but also exist in different states, where for example oil and water would be in a liquid state, whereas gas is in a gaseous phase.

For a hydrocarbon reservoir, one is interested in determining the relative concentrations of the respective oil, water and gas components flowing through the pipe (or for example being produced by a well) at any given time. Indeed it is useful to determine the constituent elements of such a flow throughout the various stages, for example during any of the various drilling, testing or production stages of the oil well.

In a multiphase flow environment the use of a nuclear source for electromagnetically irradiating a multiphase flow and determining fraction measurements for several phases flowing in a pipe is described in documents WO 99/10712 and WO 02/50522. For example, Figure 1 shows a fraction measurement meter 1 described wherein the flow through a pipe is funneled through a venturi shape 6 and irradiated by a nuclear source 2. The nuclear source could be a chemically radioactive source (but without restriction to this as the only type of system producing gamma or X-ray) whose simplicity and compactness are sometimes advantageously used for fraction measurement of a multiphase flow. The source 2 irradiates the multiphase flow with high frequency electromagnetic (EM) waves, such as gamma or x-rays, and the physical effect of such an EM bombardment are detected by the sensor 4. From the so-called "Compton" and "Photoelectric" effects it is possible to obtain the fraction measurements of the respective elements and/or phases of the flow.

The source 2 and the detector 4 enable determining the density and the composition of the flow. The detector measures the attenuation of the gamma rays having passed through the flow at two different energy levels. The energy levels are such that the high energy count rate is essentially sensitive to the density of the fluid mixture, and the low energy count rate is also sensitive to the composition of the fluid mixture. The measurements of pressure and temperature enable determining the gas density and the gas flow rate under flow rate condition and normal conditions of pressure and temperature, respectively. Such a fraction meter 1 enables for example the measuring of the total mass flow rate, the water/liquid mass ratio, and the oil, water and gas flow rates.

The oil industry has been one of the leaders in the use of this type detection. Many applications today use a chemical source (named also radionuclide, or nuclear radioactive source), whereas medical applications focusing more on a generator of X-rays. However in both cases the processing of the received signals for detecting the respective phases is possible and can be done in the same manner.

Fraction measurement based on gamma ray measurements are usually set at the beginning with the introduction of the mass attenuation of each component expected to flow through the fraction meter 1. This can be done manually based on the composition of each fluid known a priori of the measurement or by measuring the mass attenuation or linear attenuation in the fraction meter ensuring before that only one phase has been set in the fraction meter measurement section.

Such fraction meters 1 are extremely accurate, but are specifically calibrated to detect and measure the specific atoms that correspond to each phase that makes up the flow being measured (i.e. water, oil, gas). A potential disadvantage associated with this accuracy is the sensibility to a composition change or the presence of an unexpected phase (i.e. 4$^{th}$ phase).

Since the fraction meter 1 is calibrated to recognize only a certain number of components (three in this example), the presence of a further component (i.e. fourth component) is likely to lead to an slight error in the measurements of the relevant fractions (overestimation or underestimation of the fractions of one or several phases) and/or unable to detect such a fourth component.

It is therefore desirable for an embodiment of the present invention to be able to detect an additional element. It would therefore also be desirable to determine the fraction of such an additional element in order to provide a more accurate fraction measurement of the other elements that make up such a flow.

## Summary of the Invention

According to one aspect of the present invention there is provided a method of detecting an additional element from a plurality of other elements forming a multiphase flow, the method comprising: measuring an energy spectrum response based on electromagnetic irradiation of the multiphase flow; determining a fraction concentration of the other elements forming the multiphase flow based on a lower energy peak in the spectrum response; and detecting an additional element in the multiphase flow based on measuring a variation of a higher energy peak in the spectrum response.

According to another aspect of the present invention there is provided a tool for detecting an additional element from a plurality of other elements forming a multiphase flow, the tool comprising: radiation circuitry for electromagnetic irradiation of the multiphase flow and based thereon, capable of determining an energy spectrum response of the multiphase flow; first processing circuitry for determining a fraction concentration of the other elements forming the multiphase flow based on a distinct low energy peak in the spectrum response; and second processing circuitry for detecting an additional element in the multiphase flow based on measuring a variation of a less distinct high energy peak in the spectrum response.

According to another aspect of the present invention there is provided a method of detecting an n+1 element in an n-phase(s) flow through a pipe, the method comprising: measuring an energy spectrum response by injecting electromagnetic rays of a plurality of energy levels into the n-phase flow; determining a respective fractional concentration for each of the n-phase(s) flow based on measurements at one end of the spectrum response, detecting the n+1 element in the flow based on measurements at an opposite end of the spectrum response; and determining the fractional concentration of the n+1 phase and the n phase(s) flow through the pipe.

Advantageously, wherein n = 1 such that there is a monophasic flow through the pipe.

Alternatively, wherein n>1 such that there is a multiphase flow through the pipe.

Preferably, wherein the measurements at one end of the spectrum response are measurements of a plurality of low energy peaks and wherein measurement at the opposite end of the spectrum response are measurement of high energy peaks.

## List of Drawings

Embodiments of the present invention will now be described by way of an example with reference to the accompanying drawings, in which:

Figure 1 shows a known gamma-ray fraction meter;
Figure 2 shows a typical hydrocarbon application where an embodiment of the invention may be used;
Figure 3 shows an example of a source capable of irradiating the flow at three different energy levels;
Figure 4 shows a graph of electronic density versus theoretical density;
Figure 5 shows a multi-energy gamma ray spectrum response;
Figure 6 shows a recording of the third energy peak for a stable period;
Figure 7 shows a recording of the third energy peak with the injection of several sand slugs; and
Figure 8 shows the quantity of sand detected by the fraction meter.

## Description

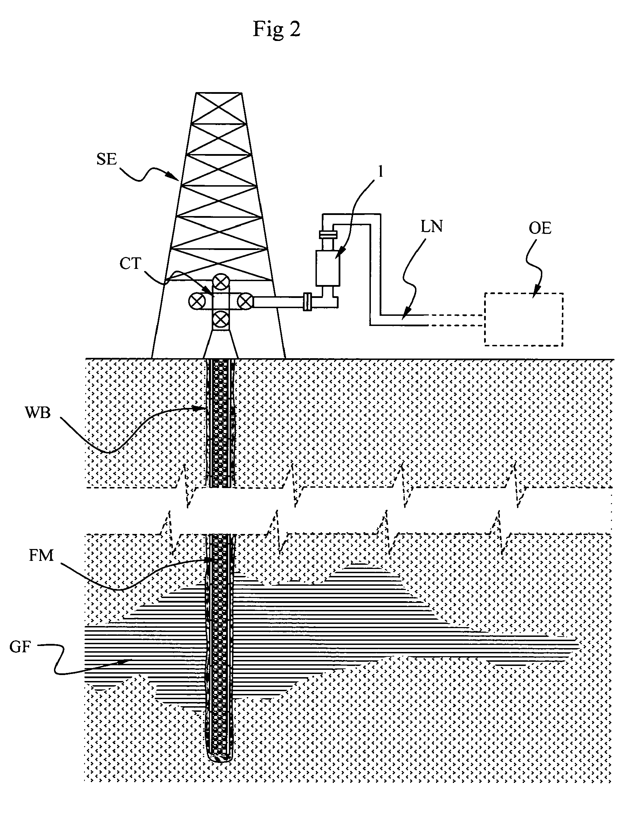

Figure 2 shows a typical onshore hydrocarbon well location and surface equipments SE above a hydrocarbon geological formation GF after a well-bore WB drilling operation has been carried out, after a casing string has been run, after cementing operations have been carried out and exploitation has begun.

A fluid mixture FM flows from selected zones of the hydrocarbon geological formation GF out of the well from a well head CT. The well head is coupled to other surface equipment OE by a flow line LN. The surface equipment OE may typically comprise a chain of elements connected together (e.g. a pressure reducer, a heat exchanger, a burner, etc ...). A fraction meter tool 1 is typically coupled to the flow line LN for measuring a multiphase fluid mixture FM.

According to a preferred embodiment, the fluid mixture FM is a multiphase flow comprising a plurality of fluid fractions (water, oil, gas). The fraction meter is already known, but embodiments of the invention are concerned with detecting an addition element in the flow, for the preferred embodiment sand. However, the flow need not be a multiphase flow and could be a single or monophasic flow, for example water, and wherein the additional element detected is mud. Another important application could be detecting the small particles of metal in an oil which is used to cut material.

Broadly speaking, at least some of the embodiments are concerned with at least one of: i) the actual detection of the existence of an additional element in a tool calibrated for a flow having known elements, ii) the determination of the quantity of the additional phase in the flow (by determining the density of that additional phase) and iii) the correction of the phase(s) constituting the flow itself to compensate for the additional element in the flow. Each of these three features can either be determined independently or performed all together.

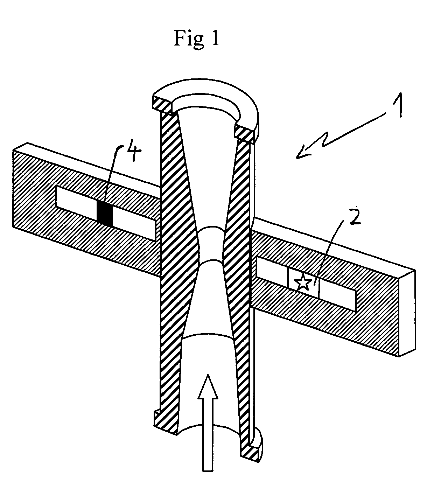

Moreover, in other embodiments it should be appreciated that the fraction meter 1 shown in Figure 1 at the surface could be located downhole, or at any location where there is flow through a pipe.

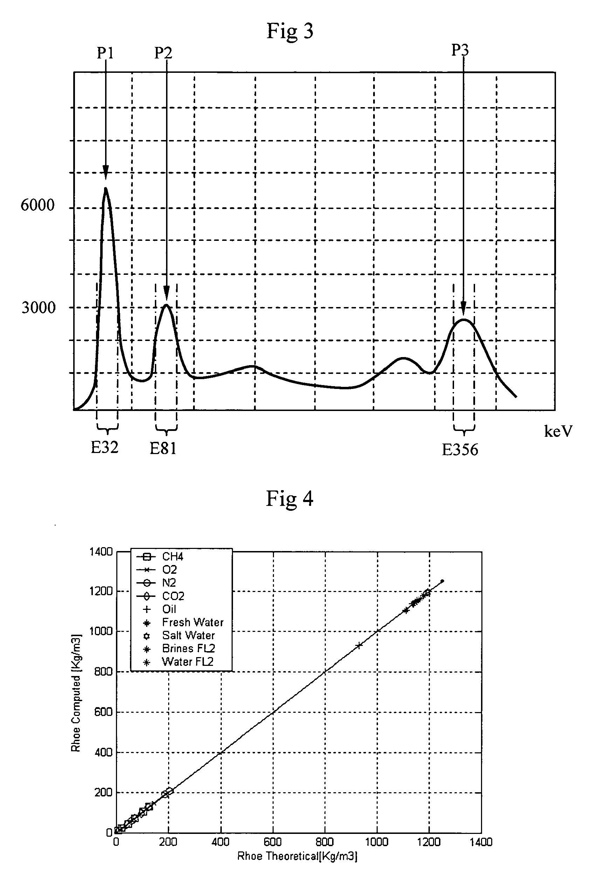

An example of a known fraction meter has already been shown in Figure 1, in which the source 2 is a photons producing source, for example a gamma-X photons source or an X-ray source. Preferably, the source produces photons at at least three different energy levels (two low energy levels and a high energy level). For example, as shown in Figure 3, the source is made of the radioisotope Barium 133 producing gamma photons. The energies of the photons are distributed in a spectrum with several peaks P1, P2, P3, a first peak P1 at a low energy around 32 keV, a second peak P2 at a low energy around 81 keV and a third peak P3 at a high energy around 356 keV. Alternatively, a known X-Ray tube may be used as a source.

The detector 7 comprises a scintillator crystal (e.g. NaITI) and a photomultiplier. The detector measures the count rates in the various energy windows corresponding to the remaining gamma rays not attenuated and therefore having passed through the entire fluid mixture. Energy windows E32, E81, E356 in which count rates are measured are associated to the peaks in the energy spectrum of the gamma photons P1, P2, P3, respectively. The detector provides three series of signals, representative of the numbers of photons detected in the first energy window E32, the second energy window E81 and the third energy window E356.

The first E32 and second E81 energy windows are such that the measurements in these energy windows are mainly sensitive to the fluid fractions of fluid mixture and the constituting elements (composition) due to the photoelectric and Compton effects at these energies. The third energy window E356 is such that the measurements in this energy window are exclusively sensitive to the density of the constituting elements mainly due to the Compton effect at this energy.

Preferably, the blocks coupled to the pipe receiving the source and the detector comprise appropriate windows into the flow (not shown) made of a material showing low absorption of the gamma rays in the energy windows of interest.

In addition to the detector 4, pressure, temperature and differential pressure sensors (not shown) can also be connected to processing circuitry located within (or external) the fraction meter 1 for processing the sensed data. The processing circuitry is thus able to compute a plurality of different outputs, for example: the flow rates of the individual phases of the multiphase fluid mixture, the water liquid ratio, etc.

Figure 3 also relates to a prior art which shows the spectrum response obtained, but whereas Figure 3 uses the third energy peak PK3 to determine the density of a composition of elements in the flow, embodiments of the invention used the third energy peak to specifically detect an additional element in the flow. Specifically, the third energy peak has been used before to detect changes in the mixture density of the flow, but not to specifically directed to measure the fraction of an additional element.

That is, in an earlier European patent application 06290887.6 filed on 31 May 2006 there was supposed and expected a change in the brine water concentration (variation of the concentration of a specific known salt piece over time) by comparing the direct electronic density computed from the third energy peak with the one issued from the two low energy peaks. The approach proposed is to take into account the nuclear properties of the high-energy peak (third peak P3), wherein by it is possible to measure directly the density of the fluid mixture, or more accurately a value proportional to the electronic density. EP 0 896 666 computes directly the salt fraction (from a know salt piece) as well as water, oil and gas fractions. US 6 332 351 uses the three energy windows to compute a Gamma r function from which is obtained a known salt piece concentration (log function).

The difference is that embodiments of the present invention are concerned with detecting an additional element, rather than a change in water composition. Moreover, the detection, measurement and correction of this additional element (any phase solid or not) can be determined directly from the spectrum response without the requirement for calibration or other information.

Figure 4 shows a graph showing that the electronic density measurement is substantially the same as the theoretical measurement. Thus, it is possible to compute, using the third high energy peak, the direct electronic density whatever the composition of the mixture.

One of the main properties of the direct electronic mixture density measurement of the embodiments of the present invention is that no fluids calibration or characterization (or POVY correlations) is required, which is required for the density detection in the prior art. The main difference is that the third energy peaks of the spectrum response are measuring directly the electronic density of the mixture and not calculating the mixture density using other needed calibration information. This direct measurement of the density of an unexpected or additional phase is particularly advantageous for a multiphase system already calibrated for only those phases and where an additional component introduces an error (or less accurate measurement of those phases).

That is, in the earlier European patent application 06290887.6 the electronic density measurement is obtained from the equation:

$$\rho_e = -K. \ln\left(\frac{N_{356}}{N_{0\_356}}\right)$$ Eq. 1

where K is a meter size calibration factor to be determined in the laboratory.

Indeed, the electronic density measurement could also be determined from the equation:

$$\rho_e = -\frac{I}{d}.\ln\left(\frac{N_{I\_356}}{N_{0\_356}}\right)$$ Eq. 2

where d is the pipe diameter.

Thus both expressions are dependent on information being input, i.e. either calibration information or the pipe diameter information.

Instead for the present invention we define a ratio B which is independent of any other physical information such as the calibration factor or pipe diameter and is determined from the equation:

$$B = \frac{\rho_{eI} - \rho_{eII}}{\rho_{eII}} = -\frac{\ln\left(\frac{N_{I\_356}}{N_{II\_356}}\right)}{\ln\left(\frac{N_{II\_356}}{N_{0\_356}}\right)}$$ Eq. 3

where N refers to the number of count rate detected by a sensor, the subscript I_356 means this is a recording at a time I and for the high energy peak (Barium for purpose set at 356 keV), the subscript II_356 refers to a time II, the subscript O_356 is the strength of the source measured before flowing or a time 0, *d* is the diameter of the pipe and *I* is an invariant and a characteristic of the fraction meter system and constant whatever the source strength.

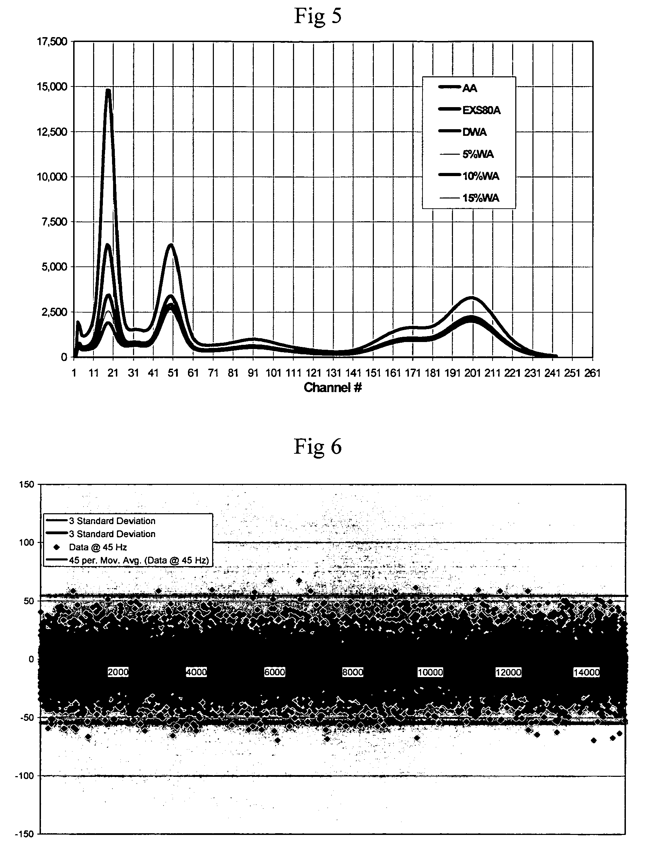

Thus, the parameter B in effect offers a generic method of monitoring the variation of the electronic density measurement versus an average value over time, which when performed for the high energy peak is used to detect an unexpected phase. Figure 5 for example shows multi-energy gamma ray spectrum response, in which the various curves represent, for example the fraction concentration of each of the n-phases in the n-phase flow as well as selected compositions. AA represents the gas, EXS80A the crude oil, DWA is the water and WA provide the different brine compositions (i.e. 5%WA is 5% NaCl in water).

By monitoring B, or the variation of the high energy peaks in the response it is possible to detect and measure the additional phase. In Figure 5 it can be seen that there looks to be two, albeit less distinct, energy peaks in the higher end of the spectrum (i.e. right side of the curve as viewed). This double peak might in fact comprise a plurality of distinctive peaks, which is referred to as the third energy peak. It is due to the use of the entire energy spectrum, more specifically monitoring variations in the higher energy peak, that allows the detection and measurement of an additional phase.

The interesting point here is that this B Parameter is depending only on the count rates at a recording time II versus a value recorded at a time I, expected to be without a fourth phase present (or n+1th phase). The parameter B is independent of any fluid properties or dimension of the pipe or any calibration factor. This advantageously is therefore easy to use and very powerful.

The detection criterion also take into account the statistical noise of the nuclear measurement, i.e. by measuring the statistical average over time. Thus, it is possible to arrive at standard deviation values, wherein another advantage of the embodiments is that in a normal multiphase flow, the system will not trigger spuriously when there is no additional phase present.

Figure 6 shows a stable flow period which comprises the instantaneous values of B. The blue diamonds in the curve represent instantaneous density differences as defined by B. The green solid lines represented the criterion of +/-3 sigma as a proper level of detection, i.e. which triggers the system to alert the detection of a fourth element. We also present the same B information (black) based on sliding average. The purpose of this averaging is to show that the same type of information can be obtained from high frequency acquisition or average acquisition and as such the recording frequency is not detrimental to the detection level or the sensitivity of the system and as such the claim here after can be applied to any acquisition frequency. However, the recording of the third energy peak in Figure 6 is shown to be stable indicating no unexpected additional component in the multiphase flow.

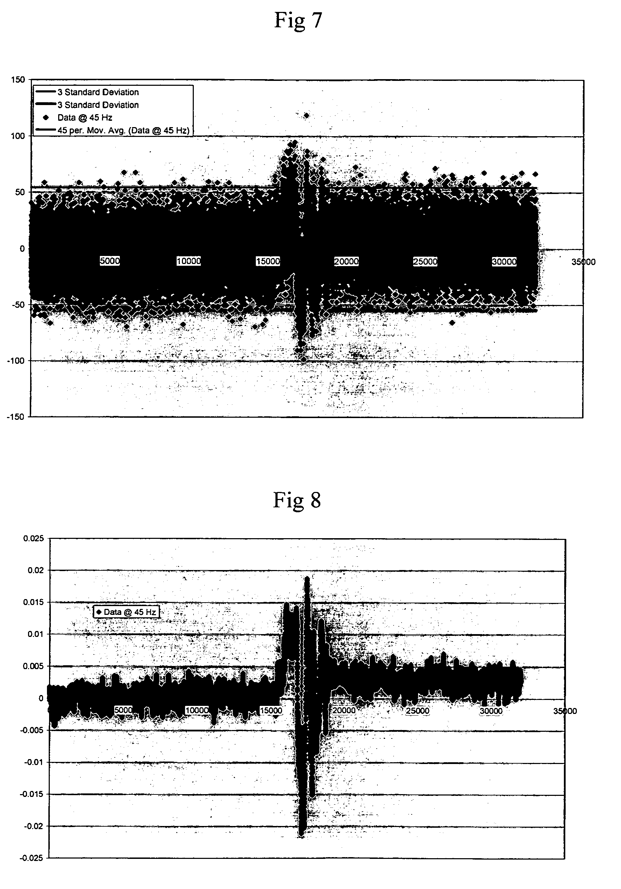

In contrast, the recording of the variation of the third energy peak is shown in Figure 7 to be highly chaotic indicated the presence of an additional component. In the preferred embodiment for an oil application comprising oil, water and gas; an educated guess would reveal that the additional component is based on slugs of sand or scale. A high gamma ray signal acquisition frequency is always more suitable, but not overly detrimental if not achieved.

A threshold criteria set at +/-3 sigma (i.e. the standard statistical variation) is represented by the green line. Any value outside of this threshold value will be detected as a possible event of an additional phase in the flow. This threshold of 3 sigma is flexible and can be advantageously set to only trigger at significant events and not trigger the system spuriously. It should be appreciated that other triggering control could also be applied.

As expected on the figure 6, the value of B is around 0; the averaging value over 1 second is obviously more stable. In conclusion, during the stable flow period (I.e., no presence of 4th phase) the monitoring of the third energy was constant and well within the 3 sigma standard deviation (green line on the figure 6). An average over 1 second of the recording has been done in black to show that the same type of information is available even at lower frequency.

It was decided to inject in a random manner some sands in the line production, in the middle of this recording presented in figure 7. It can be seen that the signal deviated largely from the normal one and went beyond the 3 standard deviation threshold criteria. Thus sand in the flow was detected as an additional component, and could be correlated and validated against a classical commercial sand detection system in place for control.

Therefore, such embodiments allow the detection (and/or rejection) of any measurement of an additional element (n+1 phase) performed with a conventional dual or multi-energy gamma ray for any type of multiphase flow with n phase, or indeed for a multi-energy gamma ray (i.e. for detecting 3 or more phases). This advantageously allows quality control of the data in substantially real-time manner. Thus, the B parameters allows a deposition on the pipe of any unexpected material to be instantaneously detected by monitoring the variation of this B parameter, and where necessary action could be taken to correct it. Another advantageous effect of the B parameter is to measure more accurately and with less information available, especially for a fast acquisition system (above 1 Hz).

It is also possible according to embodiments to calculate the quantity (or volumetric fraction) X of the additional phase in a flow.

By definition the weight concentration of an n+1 phase in an n-component system can be written:

$$G = \frac{\rho_{n+1}.X}{\rho_{n+1}.X + \rho_n} \qquad \text{Eq. 4}$$

where X is the volumetric fraction of the phase n+1, and the two other parameters being respectively the density of the phase n+1 and the density of the mixture of n components.

This can be rewritten then by taking into account the definition of the density electronic by:

$$G = \frac{\rho_{n+1}.X}{\rho_{n+1}.X + \rho_n} = \frac{\rho_{e\_n+1}.X \left.\dfrac{2Z}{A}\right)_m}{\left.\dfrac{2Z}{A}\right)_{e\_n+1} \rho_{e\_n+1}.X + \rho_{e\_n}} \qquad \text{Eq. 5}$$

where the parameter 2Z/A for each constituent is known and can be calculated or obtained from table. The calculation of a mixture component is obtained by taking into account the different component as presented in the equation 5, which can be reformulated as :

$$\left.\frac{2Z}{A}\right)_m = \sum_i \left(\left.\frac{2Z}{A}\right)_i .\alpha_i .\frac{\rho_i}{\rho_m}\right) \qquad \text{Eq. 6}$$

The definition G can be then rewritten also versus time as:

$$G = \frac{\rho_{n+1}.X}{\rho_{n+1}.X + \rho_n} = \frac{\rho_{m\_II} - \rho_{m\_I}}{\rho_{m\_II-}} \qquad \text{Eq. 7}$$

and therefore

$$G = 1 - \frac{\rho_{m\_I}}{\rho_{m\_II}} = 1 - \frac{\rho_{em\_I}}{\rho_{em\_II}} \frac{\frac{2Z}{A}\Big)_{m\_II}}{\frac{2Z}{A}\Big)_{m\_I}} = 1 - \frac{\rho_{em\_I}}{\rho_{em\_II}}.fn(X) \qquad \text{Eq. 8}$$

By using the equations (5) and (7), it can be found that the function fn(X) is equal to:

$$fn(X) = \frac{1 + \dfrac{X}{\gamma}}{1 + X} \quad \text{with} \quad \gamma = \frac{2Z}{A}\Big)_{m\_I} \qquad \text{Eq. 9}$$

In a generic way, using equation (4) and (8) it is possible to calculate X by solving:

$$0 = \beta - \alpha.\beta.fn(X) - \alpha.X.fn(X) \qquad \text{Eq. 10}$$

with

$$\beta = \frac{\rho_m}{\rho_{4th\_phase}} = \frac{-\dfrac{I}{d}\ln\dfrac{N_{m\_356}}{N_{0\_356}}}{\rho_{4th\_phase}.\dfrac{2Z}{A}\Big)_m} = \frac{\ln\dfrac{N_{m\_356}}{N_{0\_356}} \quad \dfrac{2Z}{A}\Big)_{4th\_phase}}{\ln\dfrac{N_{4th\_phase\_356}}{N_{0\_356}} \quad \dfrac{2Z}{A}\Big)_m} = \frac{\rho_{m\_n\_multiphe\_energy}}{\rho_{4th\_phase}} \qquad \text{Eq. 11}$$

and

$$\alpha = \frac{\ln\dfrac{N_{m\_356}}{N_{0\_356}}}{\ln\dfrac{N_{m+1\_356}}{N_{0\_356}}} \qquad \text{Eq. 12}$$

Thus, from equation 10 it is therefore possible to calculate in real-time the volumetric proportion of the phase n+1 (i.e. 4th phase in a 3 phase flow measurements) present in for example an n-phase system. The equation 12 is a quadratic equation with only one physical solution. In the case there is no 4th phase present then $\alpha$ will be equal to 1 then this lead to solve:

$$0 = \beta - P(X).(\beta - X),$$

which is possible only if X=0 as is correct.

This quantitative step for measuring the volumetric fraction of the additional component can therefore advantageously be performed in a substantially real-time manner and automatic manner alongside the step of actually detecting an additional phase.

More importantly, equation 10 can be calculated of several manners, wherein the last expression on the right side of the equation is particularly interesting. This expression represents the ratio of the density measured before the detection of the additional phase versus the density of the additional phase (or $n+1^{th}$ phase). Thus, the density of the additional phase (or $n+1^{th}$ phase) can be input directly to solve the problem and could be introduced at the time of the acquisition if necessary or automatically via software or changed at any time during post processing measurement for example. It should be appreciated that such versatility leads to the potential for detecting and measuring different additional elements over respective period of time. For example, the processing circuitry of the fraction meter 1 could be programmed to try and detect and measure the level of sand over a first period and then in a subsequent or later second period, try to detect some scale and then later a salinity variation, etc. Thus, this is possible by using this expression and by changing in an appropriate manner, the density.

It could be noted too that the β function can be approximate by 1 without too much error and this lead in this case to define the weight concentration present in the multiphase as defined with the parameter B introduced earlier in this invention and the volumetric concentration by:

$$X = \beta.\frac{1-\alpha}{\alpha} \qquad \text{Eq. 13}$$

Figure 8 shows the result obtained using the same frequency signal but now for the purposes of quantifying the sand fraction. Figure 8 not only shows the peaks for the different times of sand injection, but also that the signal does not come back to zero after the first injection. This offset from zero is due to a continuous production of sand at a very low level after the first sand injection.

Figure 8 shows the advantageous level of resolution that can be achieved. It can be seen that a large slug of sand came first followed by 3 smaller slugs. The concentration of the slug#2 is the highest reaching barely 2% for a very short period of time. The signal amplitude of the third energy gives directly the amount of sand passing at the throat of the Venturi and it is therefore possible to get the weight fraction or volumetric fraction of sand flowing through.

Thus it is possible to manipulate the type of quantitative outputs reflecting the quantity of sand in the multiphase flow. Also, the total amount of sand passing through the system can be calculated by doing an integration of the signal versus time. This could be a key parameter to record to ensure maintenance for example of a separator or any device where heavy component could be settling down or ensure a pigging at the right time.

A major advantage of embodiments of the invention are that by full analysis of the measured energy spectrum, the different measurements can all be performed at the same time and/or section of pipe used for the fraction measurement. Another important application is based on the behavior of the multiphase flow, which is typically chaotic and the structure of the flow is therefore changing rapidly with time. Therefore, trying to do a fraction measurement at one place and doing a correction for a fourth phase at another place lead to complex algorithmic and fluid mechanics involvement. However, embodiments of the invention are able to perform the detection, fraction measurement of the additional phase and correction of the fraction measurement of the phases in the multiphase flow at the same location. Thus measurement and correction can be performed in the same section of pipe and at the same time. Embodiments of the invention achieve this by using extra information (high energy peak) in the spectrum. Specifically a parameter is defined which requires no calibration and simultaneously is able to detect an additional phase and quality checks this detection simultaneously.

Moreover the measurements of the embodiments described can be carried out using a standard chemical source and detector (in fact the gamma rays are even interacting with the same type of atoms than the ones for the 32 and 81 keV). Therefore there is absolutely no bias introduced in the measurement system and this can be used with any fluid or composition of fluid or solid.

Finally, the embodiments of the invention are, if desired, able to easily correct for the fraction measurement (or respective concentrations) of each of the n phases in an n-phase flow. Knowing the presence and the quantity of an additional phase present in the flow, it is possible to recalculate the real fraction measurement of each of the n phases taken into account the additional element by using the well known equation 14 after correction of the measured count rate obtained by the fraction meter prior to the measurement or the additional phase. That is, the fraction measurement of a nuclear fraction meter 1 is obtained from solving the system of equation here below (3 energies):

$$\begin{bmatrix} \alpha_o \\ \alpha_g \\ \alpha_w \end{bmatrix} = fn(\rho_w, \rho_o, \rho_g, v_w^{le}, v_o^{le}, v_g^{le}, v_w^{he}, v_o^{he}, v_g^{he}, d). \begin{bmatrix} 1 \\ N_{le} \\ N_{he} \end{bmatrix} \qquad \text{Eq. 14}$$

with $\alpha_x$, $\rho_x$, $v_x^z$, $N_z$ being respectively the fraction of the phase x, the density of the phase x at line conditions, the mass attenuation of the phase x at the energy z and the count rate at the energy z. Finally d is the diameter of throat.

The embodiments overcome a number of other disadvantages, such as:
An uncompensated additional element leads to an alteration of the fraction measurement and a mathematical resolution of an equation leading to an underestimation in terms of fraction of one or several phases and the overestimation of one or several phases.

While the known techniques to measure holdup in multiphase flows are quite versatile even if two big classifications can be done (i.e. one based on the use of low energy gamma ray measurement which is the most common one, another based on electromagnetic measurement); the limitation for the latter technique is the fact that electromagnetic measurements are based on very sensitive measurement against phase distribution. Thus, knowing the inversion phase between oil and water is critical for adequate measurements between capacity and resistivity (or similar impedance measurement). The present invention overcomes this by being totally independent of this inversion phase, the interaction between the component off the fluid and the Gamma or X-ray being at microsopique level (i.e. atoms) and not macroscopic where the phase distribution (i.e. emulsion, foaming or structure of the flow) is playing a significant role.

Another limiting factor in this field is often physical space, where usually it is nearly impossible to implement several sensors in the same area and therefore be capable to measure the different parameters in the same time and space. This leads to complex interpretation model to take into account the difference in this geometrical issue. This may lead to measurements or situations that are not necessarily correlatable between what is happening at a time t1 and space s1 and what is happening at a time t2 and space 2 (further away and later in time) and therefore not accurate. Corrections are required to properly handle the flow rate measurements and mainly the fraction measurements. Embodiments of the invention overcome this in that measurements can be taken at the same time and space. Unlike a chemical source that can be mounted on any type of pipe including even in a narrow venturi throat or any other device such as V-Cone. A gamma X-ray generator (natural or not gamma source) is measuring the interaction with the components at the same time and in the same space. This avoids any further correction; the method is also insensitive to any distribution of the flow, or emulsion, foam either water or oil phase continuous.

Finally, the temperature is an issue that needs to be taken well into account in this resistivity or permittivity measurement, this becoming even more challenging in high in very high temperature if an adequate frequency of work is not used. Embodiments of the invention overcome this by being totally independent of the temperature of the flow conditions indeed the gamma ray and X-ray are interacting directly with the atoms and therefore not at all dependent of the temperature.

A Multi Energy Nuclear Fraction Meter 1 is sensitive to the variation of the linear attenuation. This physical parameter is a combination of the fluid density and the mass attenuation both being physical parameters. The density is essentially dependent of the temperature and sometime pressure for a given component. The second term is related to the composition (i.e. Atomic composition) of the fluid. This is invariant versus pressure and temperature as per definition for a given composition. If a fourth phase should be detected in a such multiphase system, in a way or another to get a proper discrimination against the others constituent, this phase needs to have a different linear attenuation, this means a density or a composition significantly different. Embodiments of the invention overcome this by looking purely at the count rate without any a priori knowledge of the fourth phase. This is a unique detector from this point of view of a 4th phase because the detection of this 4th phase is independent of any input parameter. The user needs to know only the 4th phase density in this current invention to calculate the concentration or holdup of this force phase.

Salinity, at low proportion, does not offer a significant contrast even at the low energy peaks as compared against water, thereby making a detection at low variation of concentration difficult. For example, the difference in the low energy mass attenuation coefficient between pure water and water with 25% NaCl by mass is around 0.020 m2/kg or 65% relative; to achieve satisfactory outputs (i.e. let's say to fix the idea a WLR absolute error $< \pm 0.05$), the interpretation model requires the low energy water mass attenuation coefficient to an accuracy around 1% which can be achieved.

Embodiments of the invention overcome this by looking directly at the count rate and not the mass attenuation or linear attenuation from a statistical point of view; and then compensating for natural gamma ray noise leading to a level of accuracy higher than any system based purely on the detection via the knowledge of the linear or mass attenuation. Thus, embodiments of the invention can lead to any type of detection and are better able to detect heavy atoms present in the fluid such as the H2S, CO2, some solids like Asphalten, Sand, etc, and also the variation in the compositional element (for example increase of methan or present of glycol). The introduction of an additional phase may have an impact on the holdup or cut (of for example the water). In any other case, the system is extremely accurate/robust and well characterized for a given composition based on physical measurements.

It should be appreciated that although at present a natural dual-energy gamma ray source is used, other sources are equally possible. For example, the present invention would apply to other types of radioactive sources that may be developed. Such sources might be capable of generating multiple ray energies based on different combinations of a plurality of mono-gamma ray chemical sources, multi-gamma ray sources and mono-ray radioactive sources.

It should be appreciated that the presence of n peaks for a system having n+1 phase(s) (i.e. in the case described here above with 4 phases, a chemical source with 3 peaks 32, 81, 356 is enough). It should be noted that Barium has more than 9 energies and sub energies peaks, and therefore at higher resolution level, the same principles could be applied to solve for a 10-phase system, for example.

**Claims**

1. A method of detecting an additional element from a plurality of other elements forming a multiphase flow, the method comprising:

   measuring an energy spectrum response based on electromagnetic irradiation of the multiphase flow;
   determining a fraction concentration of the other elements forming the multiphase flow based on a lower energy peak in the spectrum response; and
   detecting an additional element in the multiphase flow based on measuring a variation of a higher energy peak in the spectrum response.

2. The method of claim 1, wherein the detecting step is performed directly without requiring any information on any of the elements.

3. The method of claim 1 or 2, wherein the detecting step comprises:

   detecting an existence of the additional element by measuring the variation statistically over time such that only a variation of sufficient magnitude signifies the existence of the additional element in the multiphase fluid.

4. The method of claim 1 to 3 wherein the detecting step comprises:

   detecting a fractional concentration of the additional element by quantifying the variation over time of the higher energy peak.

5. The method of claim 4, further comprising the step of:

   correcting the fraction concentrations determined for the other elements by compensating with the fractional concentration detected for the additional element.

6. The method of any preceding claim wherein the fraction concentration is a density.

7. The method of claim 6, wherein the density of the additional element is an electronic density directly measured from the higher energy peak of the spectrum response.

8. The method of claim 7, wherein the multiphase flow is through a pipe and the electronic density is determined based on an equation:

$$\rho_e = -\frac{l}{d}.\ln\left(\frac{N_{I\_356}}{N_{O\_356}}\right)$$

where $N_{O\_356}$ and $N_{I\_356}$ are the count rates detected by a sensor for a high energy peak of 356keV, originally at time O and after a time I respective;

$d$ is a diameter of the pipe; and

$I$ is an constant characteristic of a tool for performing the measurement step.

**9.** The method of any preceding claim wherein a parameter B is defined for monitoring the variation based on an equation:

$$B_e = \frac{\rho_{eI} - \rho_{eII}}{\rho_{eII}} = -\frac{\ln\left(\frac{N_{I\_356}}{N_{II\_356}}\right)}{\ln\left(\frac{N_{II\_356}}{N_{O\_356}}\right)}$$

where N is a numerical count rate detected by a sensor,

I_356 is the sensed count rate at a time I for a high energy peak;

II_356 is the sensed count rate at a later time II for the high energy peaks; and O_356 is a sensed count rate from the source measured before flowing at a time O or at the empty pipe time (i.e. when the source is set inside the meter or any calibration time to know the strength of the source from a mathematical point of view or from a direct measurement).

**10.** The method of any of claims 7 to 9, wherein the parameter B is a ratio for monitoring the variation of the direct electronic density measurement as compared to an average density value.

**11.** The method of claim 8, wherein the pipe comprising a venturi portion at which a tool is located, the tool being able to perform the method steps of any of the preceding claims.

**12.** The method of claim 11, wherein the tool has:

a source for performing the electromagnetic irradiation of the flow;

a sensor for detecting effects of such irradiation; and

processing circuitry for determining the energy spectrum response from such sensed effects.

**13.** The method of claim 11, wherein the effects detected are at least one of Compton and Photoelectric effects.

**14.** The method of any preceding claim, wherein the electromagnetic irradiation is performed by injecting gamma rays into the multiphase flow.

**15.** The method of any preceding claim, wherein the injection of gamma rays is performed by at least one of a chemical source and a gamma ray generator.

**16.** The method of any preceding claim, wherein the electromagnetic irradiation is performed by a multi-gamma X-ray tool capable of injecting a plurality of rays at different energy levels.

**17.** The method of any preceding claim, wherein the multiphase flow comprises the elements oil, water and gas and the additional element is sand.

**18.** The method of any preceding claim wherein the magnitude of the low energy peak is substantially larger relative to the higher energy peak.

**19.** The method of any preceding claim, wherein the low energy peak is a plurality of energy peaks located substantially adjacent one another at the lower end of the spectrum relative to a high energy peak located at the higher end of the spectrum.

**20.** The method of claim 19, wherein the higher energy peak is a plurality of energy peaks located close to one another at the higher end of the spectrum relative to the low energy peaks.

**21.** A tool for detecting an additional element from a plurality of other elements forming a multiphase flow, the tool comprising:

radiation circuitry for electromagnetic irradiation of the multiphase flow and based thereon, capable of determining an energy spectrum response of the multiphase flow;

first processing circuitry for determining a fraction concentration of the other elements forming the multiphase flow based on a distinct low energy peak in the spectrum response; and

second processing circuitry for detecting an additional element in the multiphase flow based on measuring a variation of a less distinct high energy peak in the spectrum response.

**22.** The tool of claim 21, wherein the first circuitry comprising:

a source for generating the electromagnetic radiation;
at lease one sensor for sensing the effects of the electromagnetic irradiation; and
electronic processing circuitry for determining the energy spectrum based on the effects sensed by the at least one sensor.

**23.** A method of detecting an n+1 phase in an n-phase(s) flow through a pipe, the method comprising:

measuring an energy spectrum response by injecting electromagnetic rays of a plurality of energy levels into the n-phase flow;

determining a respective fractional concentration for each of the n-phase(s) flow based on measurements at one end of the spectrum response;

detecting the n+1 phase in the flow based on measurements at an opposite end of the spectrum response;

determining the fractional concentration of the n+1 phase; and

correcting the respective fractional concentration for each of the n phase(s) flow through the pipe.

**24.** The method of claim 23, wherein n = 1 for a monophasic flow through the pipe.

**25.** The method of claim 23, wherein the monophasic flow is water and wherein the n+1 phase is mud.

**26.** The method of claim 23, wherein n>1 such that there is a multiphase flow through the pipe.

**27.** The method of any of claims 23 to 26, wherein the measurements at one end of the spectrum response are measurements of a plurality of low energy peaks and wherein measurement at the opposite end of the spectrum response are measurement of high energy peaks.

Fig 1

## Fig 2

## Fig 3

## Fig 4

## Fig 5

## Fig 6

## Fig 7

## Fig 8

**European Patent Office**

## EUROPEAN SEARCH REPORT

Application Number

EP 07 29 0277

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 02/50522 A (SCHLUMBERGER TECHNOLOGY BV [NL]; SCHLUMBERGER SERVICES PETROL [FR]; SC) 27 June 2002 (2002-06-27)<br>* abstract *<br>* page 3, line 8 - line 11 *<br>* page 10, line 19 - line 31 *<br>* figure 2 * | 1,2,12, 14-27 | INV.<br>G01N23/12<br>E21B49/08<br>G01F1/74 |
| A | EP 0 032 061 A1 (TEXACO DEVELOPMENT CORP [US]) 15 July 1981 (1981-07-15)<br>* abstract *<br>* figure 2 * | 1,21,23 | |
| A | EP 0 236 623 A1 (PETRO CANADA INC [CA]; MITSUBISHI ELECTRIC CORP [JP])<br>16 September 1987 (1987-09-16)<br>* abstract *<br>* page 1, paragraph 1 *<br>* page 8, line 20 - page 9, line 25 *<br>* figure 1 * | 1,21,23 | |
| A | WO 97/42493 A (SHELL INT RESEARCH [NL]; SHELL CANADA LTD [CA])<br>13 November 1997 (1997-11-13)<br>* abstract * | 1,21,23 | TECHNICAL FIELDS SEARCHED (IPC)<br><br>G01N<br>G01F<br>E21B<br>G01V |
| A | GB 2 088 050 A (KENDALL ERNEST JOHN MICHAEL) 3 June 1982 (1982-06-03)<br>* abstract *<br>* page 3, line 29 - line 33 * | 1,21,23 | |
| A | US 6 097 786 A (GROVES JOEL [US] ET AL) 1 August 2000 (2000-08-01)<br>* abstract * | 1,21,23 | |

The present search report has been drawn up for all claims

| Place of search | Date of completion of the search | Examiner |
|---|---|---|
| Munich | 21 May 2007 | Rouault, Patrick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 970 702 A1

**ANNEX TO THE EUROPEAN SEARCH REPORT
ON EUROPEAN PATENT APPLICATION NO.**

EP 07 29 0277

This annex lists the patent family members relating to the patent documents cited in the above-mentioned European search report.
The members are as contained in the European Patent Office EDP file on
The European Patent Office is in no way liable for these particulars which are merely given for the purpose of information.

21-05-2007

| Patent document cited in search report | | Publication date | Patent family member(s) | | Publication date |
|---|---|---|---|---|---|
| WO 0250522 | A | 27-06-2002 | AU | 3323502 A | 01-07-2002 |
| | | | EG | 23173 A | 30-06-2004 |
| | | | FR | 2818379 A1 | 21-06-2002 |
| | | | GB | 2392722 A | 10-03-2004 |
| | | | GC | 0000239 A | 29-03-2006 |
| | | | US | 2004046115 A1 | 11-03-2004 |
| EP 0032061 | A1 | 15-07-1981 | US | 4289020 A | 15-09-1981 |
| EP 0236623 | A1 | 16-09-1987 | CA | 1257712 A1 | 18-07-1989 |
| | | | DE | 3676999 D1 | 21-02-1991 |
| | | | JP | 1887643 C | 22-11-1994 |
| | | | JP | 6014015 B | 23-02-1994 |
| | | | JP | 62184339 A | 12-08-1987 |
| | | | NO | 173469 B | 06-09-1993 |
| | | | US | 4788852 A | 06-12-1988 |
| WO 9742493 | A | 13-11-1997 | AU | 719913 B2 | 18-05-2000 |
| | | | AU | 2889897 A | 26-11-1997 |
| | | | BR | 9708877 A | 09-05-2000 |
| | | | CA | 2252837 A1 | 13-11-1997 |
| | | | DE | 69713884 D1 | 14-08-2002 |
| | | | DE | 69713884 T2 | 07-11-2002 |
| | | | DK | 896666 T3 | 04-11-2002 |
| | | | NO | 985069 A | 30-10-1998 |
| | | | OA | 10912 A | 21-02-2003 |
| | | | RU | 2184367 C2 | 27-06-2002 |
| GB 2088050 | A | 03-06-1982 | BR | 8107570 A | 17-08-1982 |
| | | | DE | 3146253 A1 | 21-10-1982 |
| | | | IT | 1193736 B | 24-08-1988 |
| | | | JP | 57116240 A | 20-07-1982 |
| US 6097786 | A | 01-08-2000 | AU | 4083399 A | 06-12-1999 |
| | | | CA | 2332376 A1 | 25-11-1999 |
| | | | CN | 1309768 A | 22-08-2001 |
| | | | EP | 1078251 A2 | 28-02-2001 |
| | | | NO | 20005844 A | 12-01-2001 |
| | | | WO | 9960387 A2 | 25-11-1999 |

For more details about this annex : see Official Journal of the European Patent Office, No. 12/82

19

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9910712 A
- WO 0250522 A
- EP 06290887 A
- EP 0896666 A
- US 6332351 B